# EUROPÄISCHE PATENTSCHRIFT

(11) **EP 0 662 742 B1**
(45) Veröffentlichungstag und Bekanntmachung des Hinweises auf die Patenterteilung: **02.01.1997**
(21) Anmeldenummer: 94109242.1
(22) Anmeldetag: 16.06.1994
(51) Int. Cl.: H02G 3/12

(54) **Hohlkörper für die Betonbauinstallation**
Hollow device for installation in concrete building
Corps creux pour installation dans une construction en béton

(30) Priorität: 04.01.1994 DE 4400055
(43) Veröffentlichungstag der Anmeldung: 12.07.1995
(73) Patentinhaber: Kaiser GmbH & Co. KG, D-58579 Schalksmühle (DE)
(72) Erfinder: Debie, Peter, Dipl.-Ing., D-59423 Unna (DE); Schlöter, Reinhard, D-58566 Kierspe (DE)
(74) Vertreter: Buse, Karl Georg, Dipl.-Phys.

(56) Entgegenhaltungen:
- EP-A- 0 551 610
- US-A- 3 091 687
- US-A- 3 690 501

## Beschreibung

Die Erfindung bezieht sich auf einen Hohlkörper für die Betonbauinstallation, mit einem an diesen angefügten Anschlußgehäuse zur Bildung einen Unterbringungsraumes für elektrische Einrichtungen, wie Leuchten, Dosen, Klemmen od.dgl., und mit Haltemitteln zu seinem Festlegen an einer Schalung od. dgl., wobei der Hohlkörper außer seiner vorderen Öffnung einen einseitig geschlossenen Rückteil aufweist.

Die US-A-3 690 501 und die EP-A-0 551 610 beschreiben derartige Hohlkörper.

Bei der Erstellung von Betonbauteilen, insbesondere bei Decken aus Beton, tritt das Problem auf, in dem Werkstoff Hohlkörper anzuordnen, in denen Einrichtungen, wie Deckenleuchten od.dgl., unterzubringen sind. Bisher muß der Installateur improvisieren, um Hohlräume für Einbauleuchten im Beton zu schaffen. Zur Erzeugung der Hohlräume hat der Installateur bisher Abflußrohre, Styropor oder andere Materialien benutzt. Auf diese Weise gestaltet sich die Schaffung von Hohlräumen im Beton äußerst langwierig und daher kostspielig.

Auf der anderen Seite gibt es bereits sogenannte Eingießtöpfe, die in aller Regel aus einem metallischen Werkstoff gefertigt sind. Es handelt sich hierbei um einen einseitig geschlossenen, hohlzylindrischen Körper, der, und zwar auf seiner dem Beton zugekehrten Seite, durch einen Deckel verschlossen werden kann. Ein solcher Eingießtopf verbleibt in dem Beton, und er nimmt die wesentlichen Teile der Leuchte, bei Bedarf auch einen Transformator, auf.

Die Erfindung geht von den letztgenannten Einrichtungen zur Schaffung von Hohlkörpern im Beton aus. Sie will jedoch die bisher bekannten Eingießtöpfe verbessern, weil diese nicht nur teuer in der Herstellung sind, sondern weil sie auch dem Installateur keine Möglichkeit geben, eine Anpassung an unterschiedliche Leuchten od.dgl. vorzunehmen. Vielmehr ist in der Regel ein und demselben Eingießtopf eine ganz bestimmte Deckenleuchte zugeordnet.

Demgemäß liegt der Erfindung die Aufgabe zugrunde, Hohlkörper für die Betonbauinstallation zu schaffen, die einerseits in wirtschaftlicher Weise hergestellt werden können, und die andererseits dem Benutzer, wie einem Installateur, die Möglichkeit geben, eine Anpassung an unterschiedliche Verhältnisse durchzuführen. Insbesondere soll dabei die Möglichkeit geschaffen werden, ein und demselben Hohlkörper für die Betonbauinstallation mehrere Leuchten od.dgl. zuzuordnen. Eine weitere Aufgabe der Erfindung besteht darin, einen Hohlkörper zu schaffen, der lösbar mit einem Anschlußgehäuse für einen Transformator od.dgl. verbunden werden kann, und wobei zwischen dem Hohlkörper und diesem Anschlußgehäuse eine Öffnung vorhanden ist, die durch eine Verschlußwand verschlossen ist, wobei diese ggf. entfernt werden kann.

Der erfindungsgemäße Hohlkörper für die Betonbauinstallation der genannten Art kennzeichnet sich durch die Kombination folgender Merkmale:
a) die vordere Öffnung des hohlzylindrischen Rückteils ist durch direkte Verbindung mit einem Frontteil verschließbar,
b) ein und derselbe Rückteil ist mit einem von mehreren vorhandenen, unterschiedlich gestalteten und/oder bestückten Frontteilen verbindbar,
c) jeder dieser Frontteile ist an einer Betonbauschalung befestigbar,
d) der Rückteil des Hohlkörpers hat einen Stutzen zum lösbaren Anbringen eines Anschlußgehäuses,
e) der Stutzen hat eine Zwischenwand zum Anschlußgehäuse,
f) der Stutzen hat Rastausnehmungen, die mit Rastvorsprüngen des Anschlußgehäuses zusammenwirken,
g) der Stutzen hat an seinem dem Rückteil zugekehrten Ende die Zwischenwand,
h) die Zwischenwand ist als Klappe ausgebildet, die sowohl in eine Öffnungs- als auch in eine Schließlage überführbar ist,
i) die Klappe ist über wenigstens ein Filmscharnier mit der benachbarten Wand des Rückteiles des Hohlkörpers verbunden.

Bei der bevorzugten Ausführungsform der Erfindung ist der einseitig geschlossene, hohlzylindrische Rückteil einstückig aus einem Kunststoff gefertigt. Das gleiche gilt für den Frontteil, nur sind und ein und demselben Rückteil mehrere, unterschiedlich gestaltete Frontteile zugeordnet, von denen der Benutzer in Abhängigkeit von den vorhandenen Verhältnissen einen auswählen und diesen mit dem Rückteil verbinden kann. Der jeweils benutzte Frontteil wird an einer Betonbauschalung befestigt. Dies kann in bekannter Weise geschehen, z.B. durch Nagelung, wenn es sich um eine Holzverschalung handelt. Der Frontteil ist beim bestimmungsgemäßen Gebrauch des Hohlkörpers derjenige Teil, der ortsfest ist. Mit dem Frontteil kann dann der Rückteil verbunden werden. Dies geschieht erfindungsgemäß dadurch, daß der Rückteil und der Frontteil zusammenwirkende Rastausnehmungen und Rasten aufweisen. Durch diese Verbindung ist es möglich, auch nach dem Festlegen des Frontteiles an der Betonbauschalung eine relative Verdrehung der beiden Teile zueinander vorzunehmen. Dies wäre z.B. dann nicht möglich, wenn der Frontteil mit dem Rückteil verschraubt wäre.

Zwischen dem Stutzen des Rückteiles und dem Anschlußgehäuse ist eine Zwischenwand vorhanden. Diese Zwischenwand kann beispielsweise eine herausbrechbare sein. Auf diese Weise kann zwar durch das Herausbrechen der Zwischenwand eine Verbindung zwischen dem Stutzen des Rückteiles und dem Anschlußgehäuse hergestellt werden, jedoch hat der Benutzer keine Möglichkeit, bei Bedarf diese erzeugte Öffnung wieder zu schließen. Es wird daher erfindungsgemäß eine andere Lösung vorgeschlagen, und zwar hat danach der Stutzen an seinem dem Rückteil zugekehrtem Ende eine Zwischenwand, die als Klappe ausgebildet und sowohl in eine Öffnungs- als auch in eine Schließlage überführbar ist.

Dabei kann die Klappe über wenigstens ein Filmscharnier mit der benachbarten Wand des Rückteiles des Hohlkörpers verbunden sein. Der Benutzer hat es bei dieser Ausführungsform in der Hand, die Klappe wahlweise in eine öffnungs- oder eine Schließlage zu überführen. Auf diese Weise wird auch die Möglichkeit geschaffen, die Öffnungslage der Klappe wieder aufzuheben und damit die Öffnung zwischen dem Rückteil des Hohlkörpers und dem Anschlußgehäuse wieder zu verschließen. Die Verwendung von Filmscharnieren hat den Vorteil, daß die Klappe einstückig mit der benachbarten Wand des Rückteiles des Hohlkörpers verbunden werden kann.

Es empfiehlt sich, die Klappe in Draufsicht gesehen etwa rechteckig zu gestalten und die Länge dieses Rechteckes etwa der Höhe des Rückteiles des Hohlkörpers entsprechen zu lassen. Dabei ist vorgesehen, das Filmscharnier oder die Filmscharniere im Bereich der einen Längsseite dieses Rechteckes anzuordnen.

Nach einem weiteren Vorschlag der Erfindung ist die Klappe zusätzlich über wenigstens einen Abreißsteg mit der benachbarten Wand des Rückteiles des Hohlkörpers verbunden. Ein solcher Abreißsteg wird zwangsweise zerstört, wenn die Klappe zum ersten Mal aus ihrer Schließlage in eine Öffnungslage überführt wird. Danach entfällt die Funktion des Abreißsteges.

Damit auch bei geschlossener Klappe ein Durchführen von Leitungen, Kabeln od.dgl. von dem Rückteil des Hohlkörpers in das Anschlußgehäuse durchgeführt werden kann, hat die Klappe nach einem weiteren Vorschlag der Erfindung wenigstens einen Leitungsdurchlaß. Dabei empfiehlt es sich, diesen Leitungsdurchlaß an der der Öffnung des Rückteiles des Hohlkörpers zugekehrten Schmalseite der rechteckigen Klappe anzuordnen.

Bevorzugt wird, den Leitungsdurchlaß einseitig offen und in Draufsicht gesehen U-förmig zu gestalten.

Gemäß einem weiteren Vorschlag der Erfindung weist der Rückteil des Hohlkörpers auf seiner äußeren Umfangsfläche Haltevorsprünge auf. Dabei wird bevorzugt, die Haltevorsprünge auf der Umfangsfläche des hohlzylindrischen Rückteiles diametral gegenüberliegend anzuordnen. Ferner ist vorgesehen, jedem der Haltevorsprünge wenigstens ein Loch zum Anbringen eines Halteelementes für den Rückteil aufweisen zu lassen.

Es empfiehlt sich, die Haltevorsprünge mittig und jeweils im Bereich einer Abflachung des Rückteiles anzuordnen.

Vorgesehen ist ferner, jeden Haltevorsprung in Draufsicht gesehen dreieckförmig zu gestalten, wobei die längere Seite dieses Dreiecks in die Umfangsfläche des Rückteiles des Hohlkörpers einmündet.

Es empfiehlt sich, die Enden der längeren Seite des dreieckförmigen Haltevorsprunges jeweils in einen vorstehenden Außenrand der Umfangsfläche des Rückteiles des Hohlkörpers übergehen zu lassen.

Auch bei Anordnung der Haltevorsprünge an dem Rückteil wird der gesamte Rückteil als Ganzes einstückig aus einem der in der Elektroindustrie gebräuchlichen Werkstoffe, vorzugsweise aus einem Kunststoff, hergestellt.

Nach einem weiteren Vorschlag der Erfindung ist auch an der Rückwand des Anschlußgehäuses des Hohlkörpers ein Haltevorsprung mit einem Loch angeordnet.

Dabei empfiehlt es sich, den Haltevorsprung in der Mitte der Rückwand des Anschlußgehäuses liegenzulassen. Ferner ist vorgesehen, den Haltevorsprung mit Versteifungsrändern auszurüsten.

Durch die Verwendung eines Haltevorsprunges an dem Anschlußgehäuse kann eine verbesserte Lagesicherung des Anschlußgehäuses im Betonteil herbeigeführt werden, zumal dieser Haltevorsprung ein Loch aufweist, durch den bekannte Halteelemente hindurchgreifen können.

Am Hohlkörper ist zwischen dem Stutzen des Rückteiles einerseits und dem Anschlußgehäuse andererseits eine Rastverbindung vorgesehen. Dabei ist die Verrastungsaufnahme in der Seitenwand des Stutzens durch eine klappbare Wand verschlossen.

Bevorzugt wird dabei, die Wand über ein Filmscharnier mit der Seitenwand des Stutzens zu verbinden. Die Ausbildung der klappbaren Wand ist dabei derart getroffen, daß die Verrastungsaufnahme verschlossen ist. Trotzdem wird durch eine solche klappbare Wand die Möglichkeit des Verrastens zwischen dem Rückteil und dem Anschlußgehäuse nicht benhindert. Bei dem Hohlkörper ist in der Seitenwand des Stutzens ein Durchlaß für Leitungen vorgesehen. Dieser Durchlaß kann durch eine entfernbare Wand zunächst verschlossen werden, bevorzugt wird aber, den Durchlaß mit einer dünnen Trennwand auszustatten. Diese dünne Trennwand ist so beschaffen, daß nach ihrem Durchstoßen mittels eines Rohres eine Zugentlastung sowie eine Dichtlippe gebildet wird, die mit der Umfangsfläche des eingeschobenen Rohres zusammenwirkt. Auf diese Weise wird sowohl eine Abdichtung, also ein Schutz gegen eindringende Betonmilch od.dgl. hergestellt als auch ohne zusätzliche Mittel eine Zugentlastung geschaffen.

Der Fontteil des erfindungsgemäßen Hohlkörpers ist beim bestimmungsgemäßen Gebrauch desselben derjenige Teil, der ortsfest ist. Mit dem Frontteil kann der Rückteil verbunden werden. Dies geschieht erfindungsgemäß dadurch, daß der Rückteil und der Frontteil zusammenwirkende Rastausnehmungen und Rasten aufweisen. Durch diese Verbindung ist es möglich, auch nach dem Festlegen des Frontteiles an der Betonbauschalung eine relative Verdrehung der beiden Teile zueinander vorzunehmen.

Es empfiehlt sich, den Frontteil einen mittleren Vorsprung aufweisen zu lassen, dessen Öffnung durch einen kreisförmigen Wandungsteil zunächst verschlossen ist. Dieser Wandungsteil hat Haltevorsprünge für Befestigungselemente, wie Schrauben, Nägel od.dgl., zum Festlegen des Frontteiles an einer Betonbauschalung. Dieser kreisförmige Wandungsteil ist vom Frontteil entfernbar; dies geschieht beim Entfernen der Verschalung.

Bei den bisher bekannten Hohlkörpern für die Betonbauinstallation, die als Gießtöpfe ausgebildet sind, wurden in den Aufnahmeraum des Gießtopfes sowohl Teile der Leuchte als auch der zugehörige Transformator untergebracht. Dadurch kann es zu einem Wärmestau oder zu einer Überhitzung kommen. Ein solcher Wärmestau kann bei dem erfindungsgemäßen Hohlkörper nicht entstehen. Dies deshalb nicht, weil der Rückteil des Hohlkörpers einen Stutzen zum lösbaren Anbringen eines Anschlußgehäuses aufweist. In diesem Anschlußgehäuse kann dann der Transformator untergebracht werden.

Bei der erfindungsgemäßen Ausbildung des Hohlkörpers für die Betonbauinstallation ist es somit nicht nur möglich, verschiedene Frontteile zu verwenden, von denen dann einer mit dem Rückteil verbunden werden kann, sondern der Transformator, beispielsweise der elektronische Transformator, ist nicht mehr im Temperaturbereich der Einbaustrahler untergebracht. Vielmehr befindet sich der Transformator in einem besonderen Anschlußgehäuse, das seitlich neben dem Hohlkörperrückteil angeordnet ist. Durch die erwähnten verschiedenen Frontteile sind unterschiedliche Deckenauslässe möglich. Dadurch ist eine größere Leuchtenauswahl vorhanden. Ferner ist es möglich, in den Rückteil Hohlwanddosen einzusetzen, beispielsweise solche, die nach einem Zweikammersystem ausgebildet sind, so daß zwei Spannungsarten in ein und derselben Hohlwanddose untergebracht werden können.

Bei der bevorzugten Ausführungsform der Erfindung ist das Anschlußgehäuse ein kastenförmiger, an seinem einen Ende eine Einführungsöffnung aufweisender Hohlkörper, der einen rückwärtigen Aufnahmeteil und einen vorderen Anschlußteil aufweist.

Vorgeschlagen wird, den Aufnahmeteil und den Anschlußteil des Anschlußgehäuses durch einen einen Anschlag bildenden äußeren Vorsprung voneinander zu trennen. Dabei sind an den Seitenwänden des Anschlußteiles Rastvorsprünge angeformt. Diese können durch einfaches Einschieben mit den Rastausnehmungen des Stutzens des Rückteiles verbunden werden. Es ist bei Bedarf auch eine Trennung der beiden Rasten voneinander möglich.

Es empfiehlt sich, unterhalb eines Rastvorsprunges jeweils eine Ausnehmung anzuordnen, die in der Kuppellage mit dem Stutzen des Rückteiles mit ausbrechbaren Wandungsteilen der Seitenwände dieses Stutzens fluchten. Es kann dadurch eine primäre Leitungseinführung (PRI) in den Transformatoraufnahmeteil erfolgen. Dadurch ist auch die Verwendung von NYM-Leitungen möglich. Ferner ist es von Vorteil, daß nur ein kurzer Weg zwischen der Sekundärseite des Transformators vorhanden ist. Dadurch ergibt sich eine optimale Lichtleistung der Lampe.

Durch die schon erwähnte Rastverbindung zwischen dem Rückteil des Hohlkörpers und dem Anschlußgehäuse ist auch nach erfolgter Montage eine Ausrichtung möglich, eben weil eine relative Verdrehung zwischen dem an der Schalung befestigten Frontteil und dem Rückteil möglich ist.

Zweckmäßig ist es, wenn an der Außenseite des Bodens des Anschlußgehäuses Abstützungen angeformt sind; diese wirken mit der später zu entfernenden Verschalung zusammen.

Die eine Abstützung kann dabei an der Übergangsstelle zwischen dem Aufnahmeteil und dem Anschlußteil des Anschlußgehäuses liegen, während die zweite Abstützung im Bereich des rückwärtigen Endes des Anschlußgehäuses angeordnet ist.

Bevorzugt wird, die Abstützungen unterschiedliche Höhe aufweisen zu lassen, derart, daß die Stirnfläche der einen Abstützung an der Betonbauschalung anliegen, während die Stirnflächen der anderen Abstützung entfernt davon liegen. Auf diese Weise wird die zuletzt genannte Abstützung erst dann wirksam, wenn eine bestimmte Lageveränderung des Anschlußgehäuses erfolgt ist.

Wie schon erwähnt, kann der Frontteil des erfindungsgemäßen Hohlkörpers für die Betonbauinstallation unterschiedliche Gestalt aufweisen. Bei einer ersten Ausführungsform der Erfindung wird in die Öffnung des Frontteiles ein Reflektor für eine Lampe, wie einer Halogenlampe, eingesetzt. Dieser wird im Zusammenwirken mit einer Abdeckung durch eine entfernbar Haltefeder lagegesichert. Die Abdeckung weist dabei zweckmäßig Haltewinkel auf, die ihrerseits je eine Haltefeder tragen, deren Abstützbereich an der Innenseite des scheibenförmigen Grundkörpers des Frontteiles anliegt.

Die Abdeckung übergreift dabei zweckmäßig mit einem Außenflansch die vordere Stirnfläche des mittleren Vorsprunges des Frontteiles. Die Abdeckung hat ferner eine mittlere kreisförmige öffnung zum Durchgriff des Reflektors, wobei der untere Bereich der Begrenzungswand der öffnung zur Bildung einer Auflagefläche für Teile des Randes des Reflektors nach innen abgewinkelt ist.

Es empfiehlt sich, daß auf zwei diametral gegenüberliegenden Seiten der Öffnung der Abdeckung an der Innenseite liegend je ein Haltewinkel befestigt ist, der einerseits einen freiliegenden Schenkel zur Lagerung der Haltefeder aufweist, deren eines Ende sich an einem Anschlag des Haltewinkels und deren anderes Ende sich an der Innenseite des scheibenförmigen Grundkörpers des Frontteiles abstützt.

Vorteilhaft ist es auch, daß an der Außenseite eines hochgezogenen Begrenzungsrandes der Öffnung der Abdeckung ein Träger befestigt ist, dessen oberes Ende als Abwinklung gestaltet ist, die auf ihrer Außenseite Klemmen trägt.

An die Klemmen ist einerseits eine Verbindungsleitung und andererseits eine weitere Verbindungsleitung angeschlossen, von denen die eine mit ihren Leitern an einem Steckverbinder des Reflektors und die andere an einen Transformator angeschlossen ist.

Dabei ist der Steckverbinder mit dem abgesetzten rückwärtigen Ende des Reflektors verbunden. Durch die gewählte Steckverbindung ist bei Bedarf eine Trennung vom Reflektor möglich.

Nach einem weiteren Vorschlag der Erfindung ist mit dem Frontteil des Hohlkörpers lösbar eine Hohlwanddose verbindbar, die nach ihrem Durchstecken durch die Öffnung des Frontteiles sich mit ihrem Abstützflansch in eine Versenkung des Begrenzungsrandes der Öffnung legt, und deren Halteglieder durch Betätigen von Stellschrauben an die Innenwand des Frontteiles zwecks Fixierung der Hohlwanddose andrückbar sind.

Nach einem weiteren Vorschlag der Erfindung ist die Öffnung des Frontteiles derart bemessen, daß der Transformator durch sie hindurchführbar und in den rückwärtigen Aufnahmeraum des Anschlußgehäuses einbringbar ist. Durch diese Gestaltung ist es möglich, auch nach dem Zusammenbau von Rückteil und Frontteil des Hohlkörpers den Transformator in das Anschlußgehäuse einzuführen, welches seinerseits mit dem Rückteil des Kohlkörpers verbunden ist.

Vorteilhaft ist auch die Verwendung von Frontteilen mit unterschiedliche Durchmesser aufweisendem mittlerem Vorsprung. Auf diese Weise kann mit einfachsten Mitteln eine Anbringen einer entsprechenden Anzahl von Anschlußgehäusen aufweisen zu lassen.

In den Figuren der Zeichnungen ist die Erfindung in mehreren Ausführungsbeispielen dargestellt, und zwar zeigen:
- Fig. 1: in schaubildlicher und explosionsartiger Darstellung den erfindungsgemäßen Hohlkörper für die Betonbauinstallation mit den zugehörigen Einzelteilen vor dem Zusammenbau, wobei ein und demselben Rückteil mehrere, unterschiedlich bestückte und ausgebildete Frontteile zugeordnet sind,
- Fig. 2: im Schnitt und im verkleinerten Maßstab, teilweise weggebrochen, einen in eine Betondecke eingesetzten Hohlkörper für die Betonbauinstallation, wobei in dem Hohlkörper eine Leuchte und die damit zusammenwirkenden Einzelteile eingesetzt sind, während in dem Anschlußteil ein Transformator angeordnet ist,
- Fig. 3: in vergrößertem Maßstab und im Schnitt den Rückteil des erfindungsgemäßen Hohlkörpers für die Betonbauinstallation sowie einen Teilschnitt durch den Stutzen dieses Rückteiles nach dem Einschieben eines Rohres in den Durchlaß der Seitenwand des Stutzens,
- Fig. 4: ebenfalls im Schnitt, den mit dem Rückteil zusammenwirkenden Frontteil des Hohlkörpers,
- Fig. 5: eine Unteransicht des Frontteiles des Hohlkörpers gemäß der Fig. 4 der Zeichnungen,
- Fig. 6: in Seitenansicht ein Anschlußgehäuse, welches mit dem Rückteil des Hohlkörpers gemäß der Fig. 1 kuppelbar ist,
- Fig. 7: in Vorderansicht das Anschlußgehäuse nach der Fig. 6 der Zeichnungen,
- Fig. 8: im Schnitt und im vergrößerten Maßstab eine andere Ausführungsform des erfindungsgemäßen Frontteiles mit einer zugeordneten Deckenleuchte und deren Teile einschließlich eines Transformators,
- Fig. 9: ebenfalls einen Schnitt durch einen Frontteil des erfindungsgemäßen Hohlkörpers für die Betonbauinstallation, nunmehr jedoch in Verbindung mit einer Hohlwanddose,
- Fig. 10: in Seitenansicht die Hohlwanddose gemäß der Fig. 9 der Zeichnungen, und
- Fig. 11: in schaubildlicher und explosionsartiger Darstellung sowie in vergrößertem Maßstab die Einzelteile der Hohlwanddose nach den Fig. 9 und 10 vor dem Zusammenbau der Einzelteile, teilweise weggebrochen.

Es sei zunächst erwähnt, daß in den Figuren der Zeichnungen nur diejenigen Teile eines Hohlkörpers für die Betonbauinstallation dargestellt sind, welche für das Verständnis der Erfindung Bedeutung haben. So ist insbesondere die Schalung fortgelassen. An dieser Schalung kann der Frontteil des Hohlkörpers festgelegt werden. Dazu können in der einschlägigen Technik gebräuchliche Verbindungsarten gewählt werden. Auch die in der Hohlwanddose unterzubringenden elektrischen Teile sind fortgelassen. Im übrigen können alle in den Zeichnungen nicht dargestellten Teile eine an sich bekannte Ausbildung haben. Auch ist ihre Unterbringung in dem jeweiligen Hohlkörper in bekannter Weise durchführbar.

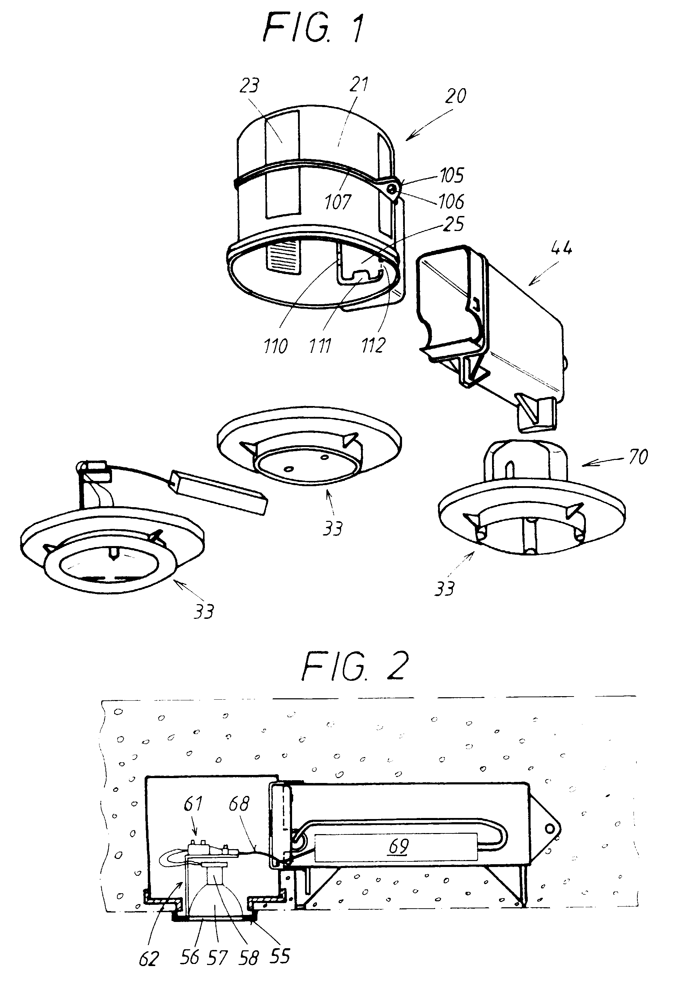

Die Fig. 1 der Zeichnungen gibt die wesentlichen Teile des erfindungsgemäßen Hohlkörpers für die Betonbauinstallation wieder. Dabei ist der Hohlkörper als Ganzes mit 20 bezeichnet. Zu ihm gehört ein Rückteil 21, dessen vordere Öffnung durch einen Frontteil 33 verschlossen werden kann. Dieser Frontteil 33 kann eine unterschiedliche Ausbildung haben, und er kann - wie in der Fig. 1 ersichtlich - auch in unterschiedlicher Weise bestückt werden. Und schließlich gehört in einigen Fällen der Praxis zu dem Rückteil 21 des Hohlkörpers 20 auch ein generell mit 44 bezeichnetes Anschlußgehäuse.

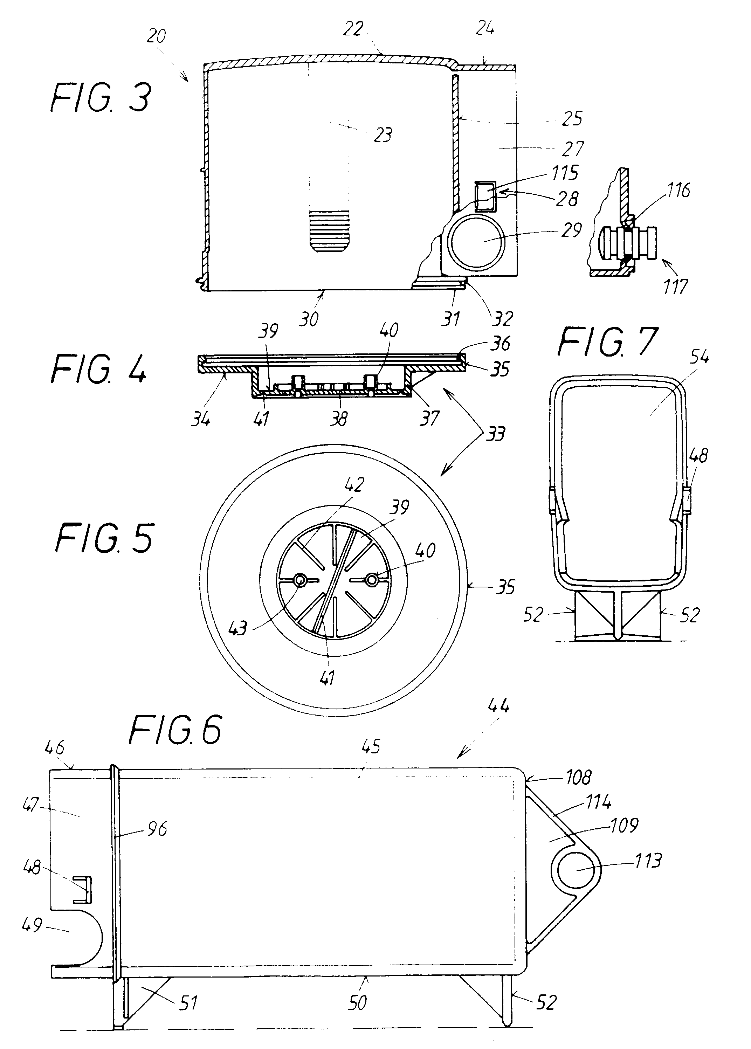

Der Rückteil des erfindungsgemäßen Hohlkörpers 20 für die Betonbauinstallation ist in der Fig. 3 in vergrößertem Maßstab und im Schnitt wiedergegeben. Daraus ergibt sich, daß der Rückteil 21 ein im wesentlichen hohlzylindrischer Körper ist, dessen rückwärtiges Ende geschlossen ist. Das Verschließen dieser Öffnung des Rückteiles 21 erfolgt durch einen Boden 22. An der Umfangsfläche des Rückteiles 21 sind zunächst mehrere, im dargestellten Ausführungsbeispiel insgesamt drei, Abflachungen 23 vorgesehen, die in Längsrichtung des Rückteiles 21 verlaufen. Im Bereich dieser Abflachungen 23 ist die Wandstärke des Rückteiles 21 reduziert, so daß dort mit grundsätzlich bekannten Mitteln Einführungsöffnungen für Kabel, Leitungen od.dgl. geschaffen werden können.

Wie die Fig. 1 der Zeichnungen erkennen läßt, weist der Rückteil 21 des Hohlkörpers 20 auf seiner äußeren Umfangsfläche Haltevorsprünge 105 auf. Diese Haltevorsprünge 105 liegen im gewählten Ausführungsbeispiel diametral gegenüber, und zwar auf der Umfangsfläche des hohlzylindrischen Rückteiles 21. Jeder Haltevorsprung 105 hat ein Loch 106 zum Anbringen eines Halteelementes für den Rückteil 21. Bei den Haltemitteln kann es sich um bekannte handeln, so daß auf ihre zeichnerische Darstellung verzichtet ist.

Im gewählten Ausführungsbeispiel sind die Kaltevorsprünge 105 mittig und jeweils im Bereich einer der drei Abflachungen 23 des Rückteiles 21 angeordnet.

Jeder Haltevorsprung 105 ist im dargestellten Ausführungsbeispiel in Draufsicht gesehen dreieckförmig gestaltet, wobei die längere Seite dieses Dreiecks in die Umfangsfläche des Rückteils 21 des Hohlkörpers 20 einmündet. Die Enden der längeren Seite des dreieckförmigen Haltevorsprunges 105 gehen jeweils in einen vorstehenden Außenrand 107 der Umfangsfläche des Rückteiles 21 des Hohlkörpers 20 über.

An der Umfangsfläche des Rückteiles 21 des Hohlkörpers 20 ist ferner ein Stutzen 24 angeformt, der - wie die Fig. 3 erkennen läßt - im wesentlichen die gesamte Höhe des Rückteiles 21 umfaßt. In Vorderansicht gesehen, ist der Stutzen 24 etwa rechteckförmig gestaltet, wobei seine Seitenwandungen mit 27 bezeichnet sind. Neben zwei längeren Seitenwandungen 27, die sich über die gesamte Höhe des Rückteiles 21 erstrecken, sind auch kürzere Seitenwandungen 27 vorhanden. Aus der Fig. 3 der Zeichnungen ist ersichtlich, daß der Stutzen 24 an seinem hinteren Ende durch eine Wand verschlossen ist. Diese Wand ist im dargestellten Ausführungsbeispiel als Klappe ausgebildet und sowohl in eine Öffnungs- als auch in eine Schließlage überführbar. In der Lage der Klappe 25 gemäß der Fig. 3 der Zeichnungen befindet sich diese in der Schließlage.

Die Klappe 25 ist wenigstens über ein Filmscharnier 110 mit der benachbarten Wand des Rückteiles 21 des Hohlkörpers 20 verbunden.

Die Klappe 25 ist in Draufsicht gesehen etwa rechteckig gestaltet, und die Länge dieses Rechteckes entspricht etwa der Höhe des Rückteiles 21 des Hohlkörpers 20. Das Filmscharnier 110 oder - falls vorhanden - die Filmscharniere sind im Bereich der einen Längsseite des Rechteckes angeordnet.

Durch die Verwendung wenigstens eines Filmscharniers 110 kann somit die Klappe 25 aus der in Fig. 1 dargestellten Schließlage in eine Öffnungslage überführt werden, beispielsweise um einen Durchgang zum Einbringen von elektrischen oder elektronischen Teilen in ein Anschlußgehäuse 44 zu erhalten. Nach dem Durchbringen dieser Teile kehrt die Klappe 25 in ihre Schließlage gemäß der Fig.l 3 der Zeichnungen zurück.

Im Ausführungsbeispiel ist vorgesehen, die Klappe 25 zusätzlich über wenigstens einen Abreißsteg 112 mit der benachbarten Wand des Rückteiles 21 des Hohlkörpers 20 zu verbinden. Dieser Abreißsteg 112 wird bei der Fertigung des Rückteiles 21 miterzeugt. Der Abreißsteg 112 hält die Klappe 25 solange in der Schließstellung, bis es vom Benutzer des Rückteiles zerstört wird.

Die Klappe 25 weist wenigstens einen Leitungsdurchlaß 111 auf. Im dargestellten Ausführungsbeispiel liegt dieser Leitungsdurchlaß 111 an der der Öffnung 30 des Rückteiles 21 des Hohlkörpers 20 zugekehrten Schmalseite der rechteckigen Klappe 25.

Im gewählten Ausführungsbeispiel ist der Leitungsdurchlaß 111 einseitig offen und in Draufsicht gesehen U-förmig gestaltet. Durch die Verwendung eines solchen Leitungsdurchlasses 111 kann auch bei geschlossener Klappe 25 ein Hindurchführen einer Leitung od.dgl. aus dem Aufnahmeraum des Rückteiles 21 in den Aufnahmeraum des Anschlußgehäuses 44 erfolgen.

Mit dem Stutzen 24 des Rückteiles 21 des Hohlkörpers 20 kann ein Anschlußgehäuse 44 zusammengekuppelt werden. Zu diesem Zweck ist in den beiden längeren Seitenwänden 27 des Stutzens 24 jeweils eine Verrastungsaufnahme 28 vorgesehen. Diese ist jedoch nicht als glatter, in Draufsicht gesehen rechteckiger Durchbruch der Seitenwand 27 ausgebildet, sondern die Verrastungsaufnahme 28 ist durch eine klappbare Wand 115 verschlossen. Die Klappbarkeit der Wand 115 wird dadurch erzielt, daß sie über ein nicht näher bezeichnetes Filmscharnier mit der benachbarten Seitenwand 27 des Stutzens 24 verbunden ist. Durch die klappbare Wand 115 der Verrastungsaufnahme 28 wird das Eindringen von Betonmilch od.dgl. in das Innere des Stutzens 24 verhindert.

Mit der Verrastungsaufnahme 28 wirkt beim Zusammenkuppeln mit dem Anschlußgehäuse 44 ein Rastvorsprung 48 zusammen. Dieser ist in der Fig. 6 der Zeichnungen zu erkennen. Selbstverständlich ist jeder Verrastungsaufnahme 28 ein Rastvorsprung 48 zugeordnet.

Unterhalb der Verrastungsaufnahme 28 ist in den Seitenwandungen 27 des Stutzens 24 ein Durchlaß 29 vorgesehen, der mit einer dünnen Trennwand zunächst geschlossen ist. Diese dünne, nicht näher bezeichnete Trennwand des Durchlasses 29 kann vom Benutzer des Hohlkörpers mittels eines Rohres 117 durchstoßen werden. Beim Durchstoßen der dünnen Trennwand entstehen nicht nur eine Dichtlippe 116, sondern auch eine Zugentlastung. Dies ist darauf zurückzuführen, daß die Begrenzungswandungen der beim Durchstoßen der Trennwand gebildeten Öffnungen mit der Umfangsfläche des Rohres 117 im Sinne einer Abdichtung und einer Zugentlastung zusammenwirken. Wie aus der Fig. 3 der Zeichnungen, rechte Seite, hervorgeht, ist nach dem Durchstoßen der Trennwand des Durchlasses 29 eine Einführungsöffnung geschaffen; dort erfolgt die primäre Leitungseinführung (PRI) in das Aufnahmegehäuse 44. Bei dieser Ausgestaltung ist die Verwendung von NYM-Leitungen möglich.

Wie die Fig. 3 der Zeichnungen ferner erkennen läßt, hat der Rückteil 21 des Hohlkörpers 20 eine vordere Öffnung 30; diese wird von einer umlaufenden Begrenzungswand 31 umgeben. An der Außenseite dieser umlaufenden Begrenzungswand ist eine ebenfalls umlaufende Rastausnehmung 32 angeordnet, die dem Zusammenkuppeln mit einem der vorhandenen Frontteile 33 dient.

Es sei an dieser Stelle erwähnt, daß der gesamte Hohlkörper 20 einstückig aus einem der in der Elektroindustrie gebräuchlichen Werkstoffe hergestellt ist.

Zu dem Rückteil 21 des Hohlkörpers 20 gehört ein generell mit 33 bezeichneter Frontteil. Eine Ausführungsform des Frontteiles ist in den Fig. 4 und 5 der Zeichnungen wiedergegeben. Auch dieser Frontteil 33 ist wiederum einstückig aus einem der in der Elektroindustrie gebräuchlichen Werkstoffe, insbesondere aus einem Kunststoff, gefertigt. Der Frontteil 33 hat einen scheibenförmigen Grundkörper 34, der in einen vorspringenden Außenflansch 35 übergeht. An der Innenwand dieses Außenflansches 35 ist eine umlaufende Rast 36 angebracht, die mit der erwähnten Rastausnehmung 32 des Rückteiles 21 des Hohlkörpers 20 zusammenwirkt. Die gewählte Rastverbindung zwischen dem Rückteil 21 und dem Frontteil 33 hat den Vorteil, daß beim bestimmungsgemäßen Gebrauch des Hohlkörpers 20 für die Betonbauinstallation eine nachträgliche Verdrehung der beiden Teile möglich ist. Dabei muß berücksichtigt werden, daß der Frontteil 33 beim bestimmungsgemäßen Gebrauch an einer Schalwand in bekannter Weise festgelegt ist. Auf den so festgelegten Frontteil 33 kann dann der Rückteil 21 des Hohlkörpers 20 aufgerastet werden. Auch nach dem Auftreten ist bei der erfindungsgemäßen Ausbildung noch eine Relativbewegung, und zwar eine Drehung des Rückteiles 20 im Bezug auf den einer Schalung befestigten Frontteil 33 möglich.

An der Außenseite und in der Mitte des scheibenförmigen Grundkörpers 34 des Frontteiles 33 liegend ist ein mittlerer Vorsprung 37 vorgesehen. Der vordere Bereich dieses mittleren Vorsprunges 37 ist durch einen kreisförmigen Wandungsteil 38 verschlossen, wie die Fig. 4 der Zeichnungen erkennen läßt. An der Innenwand 39 sind im dargestellten Ausführungsbeispiel insgesamt zwei Haltevorsprünge 40 vorgesehen. Diese liegen auf unterschiedlichen Seiten im Bezug auf den Mittelpunkt des kreisförmigen Wandungsteiles 38 und haben jeweils eine sacklochartige Bohrung 43, durch welche Befestigungselemente, wie Nägel od.dgl., hindurchgertrieben werden. Diese Befestigungselemente dienen dazu, den Frontteil 33 an der nicht dargestellten Schalung in bekannter Weise festzulegen. Um beim Entfernen der Schalung das Abreißen des kreisförmigen Wandungsteiles 38 vom mittleren Vorsprung 37 zu erleichtern, sind Sollbruchrinnen 41 vorgesehen. Nach dem Entfernen der halbkreisförmigen Wandungsteile 38 hat der Frontteil 33 eine nicht näher bezeichnete Einführungsöffnung, die in noch zu schildernder Weise zur weiteren Bestückung des Hohlkörpers herangezogen wird. An der Innenwand 39 des Wandungsteiles 38 sind ferner radiale Rippen 42 vorgesehen.

Mit dem Stutzen 24 des Rückteiles 21 des Hohlkörpers 20 kann bei Bedarf ein in den Fig. 6 und 7 der Zeichnungen dargestelltes Anschlußgehäuse 44 lösbar verbunden werden. Aus diesen Figuren ergibt sich, daß das Anschlußgehäuse 44 ein aus einem Kunststoff gefertigter, einstückiger Hohlkörper ist; dieser hat einen rückwärtigen Aufnahmeteil 45 und einen Anschlußteil 46. Letzterer dient dem Zusammenwirken mit dem Stutzen 24 des Rückteiles 21. Der rückwärtige Teil 45 und der Anschlußteil 46 des Anschlußgehäuses 44 sind durch einen außenliegenden, umlaufenden Vorsprung 96 voneinander getrennt. Der Vorsprung 96 dient zugleich als Anschlag für die Stirnfläche des Stutzens 24 beim Zusammenkuppeln vom Rückteil und Anschlußgehäuse.

In Draufsicht gesehen hat der Anschlußteil 46 eine Öffnung von rechteckiger Gestalt. Diese Öffnung wird durch Seitenwandungen 47 begrenzt. In den längeren der insgesamt vier Seitenwandungen 47 sind an der Außenseite liegend die schon erwähnten Rastvorsprünge 48 vorgesehen, die mit den Verrastungsaufnahmen 28 des Stutzens 24 des Rückteiles 21 zusammenwirken. Um nach dem Zusammenkuppeln ein Lösen des Anschlußgehäuses 44 von dem Rückteil 21 zu ermöglichen, sind die Seitenwandungen 47 soweit elastisch gehalten, daß sie durch Druckeinwirkung einander genähert werden können, so daß ein Aufheben der Rastverbindung erfolgt.

Unterhalb des Rastvorsprunges 48 ist in den Seitenwandungen 47 jeweils eine Ausnehmung 49 vorgesehen, die nach vorn hin offen ist. Nach dem Zusammenkuppeln von Anschlußgehäuse 44 und Rückteil 21 überlappen sich der Durchlaß 29 mit der Trennwand des Stutzens 24 und die Ausnehmung 49 der Seitenwand 47 des Anschlußteiles 46 des Anschlußgehäuses 44.

Der Boden des kastenförmig gestalteten Anschlußgehäuses 44 ist mit 50 bezeichnet. An seiner Außenseite hat er eine vordere, mittig am Boden angeformte Abstützung 51 sowie am geschlossenen hinteren Ende liegende hintere Abstützungen 52. Die Abstützungen sind im gewählten Ausführungsbeispiel jeweils als einfache Wand ausgebildet, die quer dazu angeordnete Wandteile aufweisen. Die nicht näher bezeichnete vordere Stirnfläche der hinteren Abstützung 52 des Anschlußgehäuses 44 findet beim bestimmungsgemäßen Gebrauch Anlage an der nicht dargestellten Schalung. Dagegen ist die vordere Abstützung 51 etwas kürzer gehalten, so daß ein Abstand zwischen ihrer vorderen Stirnfläche und der Schalung vorhanden ist. Auf diese Weise wird eine gewisse Beweglichkeit erreicht. Die Ausbildung der Abstützung 51 und 52 kann im übrigen abweichend von dem gewählten Ausführungsbeispiel verändert werden.

Wie aus der Fig. 6 der Zeichnungen ersichtlich, ist die Rückwand des Anschlußgehäuses 44 mit 108 bezeichnet. An dieser Rückwand 108 ist ein Haltevorsprung 109 mit einem Loch 113 vorgesehen. Im dargestellten Ausführungsbeispiel liegt der Haltevorsprung 109 in der Mitte der Rückwand 108 des Anschlußgehäuses 44. Ihm sind Versteifungsränder 114 zugeordnet. In Draufsicht gesehen, hat der Haltevorsprung 109 dreieckförmige Gestalt, wobei die längere Seite dieses Dreiecks in die Rückwand 108 übergeht.

In den Fig. 4 und 5 der Zeichnungen ist der Frontteil 33 in seinem ursprünglichen Zustand wiedergegeben, d.h., seine mittlere Öffnung ist durch die ausbrechbare, kreisförmige Wandung 38 verschlossen. Sobald nach dem Entfernen der Schalung dieser ausbrechbare Wandungsteil entfernt wird, entsteht dort eine Öffnung 56. Es kann dann gemäß Fig. 2 der Zeichnungen z.B. eine Leuchte oder - vergleiche dazu die Fig. 1 der Zeichnungen - eine Hohlwanddose 70 eingebracht werden.

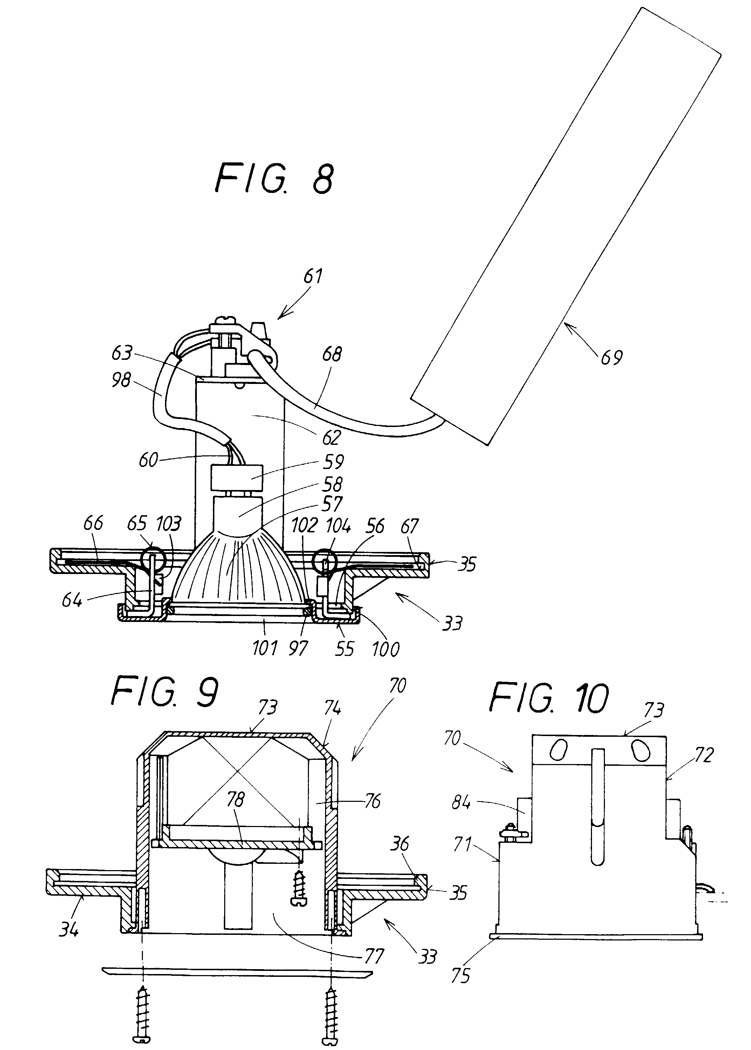

Wie die Fig. 8 der Zeichnungen erkennen läßt, ist durch die Öffnung 56 des mittleren Vorsprunges 37 des Frontteiles 33 ein generell mit 57 bezeichneter Reflektor hindurchgeführt. Dieser wird dann unter Zwischenschaltung einer Abdeckung 55 und unter Benutzung einer Haltefeder 97 im Bereich der Öffnung 56 festgelegt. Diese Haltefeder 97 drückt einen nicht näher bezeichneten Außenflansch des Reflektors 57 gegen einen Gegenanschlag der Abdeckung 55, so wie dies in der Fig. 8 der Zeichnungen dargestellt ist.

Zu der Abdeckung 55 gehört auch ein an ihr befestigter Träger 62, der etwa L-förmige Gestalt hat. Das eine Ende dieses L's ist dabei in bekannter Weise an der Abdeckung 55 festgelegt. Der kürzere Schenkel des Trägers 62 ist die Abwinklung 63. An dieser ist auf der Außenseite liegend ein Klemmensatz bekannter Bauart angeordnet, der mit 61 bezeichnet ist. Von den Klemmen 61 geht eine Verbindung 98 aus, die zu einem Anschluß 59 führt. Dieser Anschluß ist über eine Steckverbindung mit dem rückwärtigen Ende 58 des Reflektors lösbar verbunden.

Der Abdeckung 55 sind zwei diametral gegenüberliegende Haltewinkel 64 zugeordnet, die jeweils eine Haltefeder haben, die mit 65 bezeichnet ist. Mit ihrem einen Ende stützt sich die Haltefeder an Bereichen des Haltewinkels 64 ab, das andere Ende dieser Haltefeder hat jeweils einen Abstützbereich 66, der an der Innenwand 67 des scheibenförmigen Grundkörpers 34 des Frontteiles 33 anliegt.

Von den Klemmen 61 geht ferner eine Verbindungsleitung 68 aus, deren vorderes Ende in bekannter Weise mit den Anschlüssen eines an sich bekannten Transformators 69 verbunden ist. Bei dem dargestellten Transformator handelt es sich um einen elektronischen Transformator schlanker Bauform. Diese Bauform ist deshalb gewählt, um eine Montage durch die öffnung 56 des Frontteiles 33 zu ermöglichen.

Wie die Fig. 2 der Zeichnungen erkennen läßt, ist dieser Transformator 59 durch die Öffnung 56 des Frontteiles 33 hindurch in den Aufnahmeraum 45 des Anschlußgehäuses 44 eingeführt. Der Transformator 59 liegt dabei auf der Innenseite des Bodens 50 des Anschlußgehäuses 44. Durch die erfindungsgemäße Anordnung ist erreicht, daß keine zusätzliche Öffnung für einen Transformator geschaffen werden muß. Vielmehr wird die sowieso vorhandene Öffnung 56 des Frontteiles 33 auch dazu benutzt, um den Transformator 69 in den Aufnahmeraum des Anschlußgehäuses 44 einzuführen. Diese Anordnung hat darüber hinaus den weiteren Vorteil, daß der elektronische Transformator 69 nicht im Temperaturbereich der Einbaustrahler liegt. Mit anderen Worten, es ist ein Thermoschutz durch eine seitliche Anordnung des Transformators 69 im Anschlußgehäuse 44 erzielt worden. Ferner ist ein kurzer Weg zwischen der Sekundärseite des Transformators 69 und den Anschlußklemmen 61 vorhanden. Dadurch wird eine optimale Lichtleitung einer nicht dargestellten Lampe, wie einer Halogenlampe, erzielt.

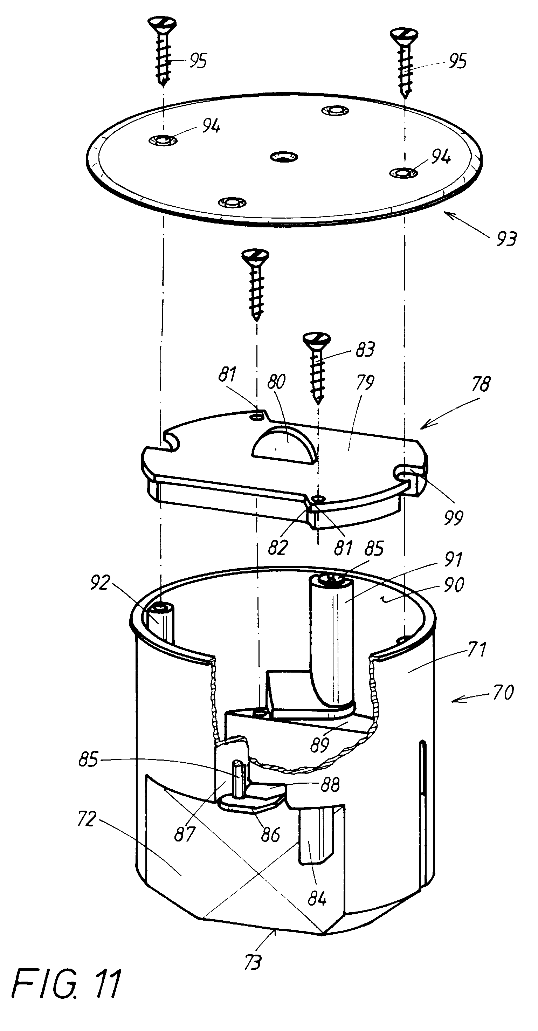

In der Fig. 9 der Zeichnungen ist demgegenüber in die Öffnung 56 des Frontteiles 33 eine generell mit 70 bezeichnete Hohlwanddose eingesetzt, deren genaue Ausbildung aus der Fig. 11 der Zeichnungen ersichtlich ist. Daraus ergibt ist, daß es sich bei der Hohlwanddose 70 um einen etwa hohlzylinderförmigen Hohlkörper handelt, dessen Umfangsfläche mit 71 bezeichnet ist. Der obere Teil der Umfangsfläche 71 ist im wesentlichen hohlzylinderförmig gestaltet. Dagegen sind im unteren, d.h. dem Boden 73 benachbarten Bereich abgeflachte Bereiche 72 vorgesehen, die auf diametral gegenüberliegenden Seiten der Hohlwanddose 70 liegen, und die parallel zueinander angeordnet sind. Im übrigen geht die Umfangsfläche 70 über eine Abschrägung 74 in den Boden 73 über. Die Hohlwanddose 70 ist einstückig aus einem der in der Elektroindustrie gebräuchlichen Werkstoffe hergestellt. Sie hat auf ihrer der Einführungsöffnung benachbarten Seite einen nach außen gerichteten Abstützflansch 75. Dieser legt sich, wie in der Fig. 9 der Zeichnungen ersichtlich, in einen nicht näher bezeichneten Aufnahmeraum in der Stirnfläche des Frontteiles 33. Dies geschieht derart, daß eine bündige Anordnung erzielt ist.

Der großvolumige Innenraum der Hohlwanddose 70 ist in zwei Aufnahmeräume unterteilt, und zwar einmal in den unteren Aufnahmeraum 76 und zum anderen in den oberen Aufnahmeraum 77; beide sind durch eine Trennwand 78 voneinander getrennt. Diese Trennwand hat, wie die Fig. 11 der Zeichnungen erkennen läßt, in Draufsicht gesehen etwa die Gestalt eines Rechtecks, wobei jedoch an den längeren Seitenkanten seitliche Vorsprünge 81 vorgesehen sind. In diesem Bereich ist jeweils ein kreisförmiger Durchbruch 82 vorgesehen, dieser dient zum Durchgriff von Halteschrauben 83, die mit ihrem Schaft in die nicht näher bezeichnete sacklochartige Bohrung eines Außenvorsprunges 84 eingreifen.

Zu der Hohlwanddose 70 gehören auch zwei Stellschrauben 85, die zur Lageveränderung eines Haltegliedes 86 dienen. Dieses Halteglied 86 ist in an sich bekannter Weise vor seinem Wirksamwerden in einer Unterbringungskammer 88 an der Außenfläche der Hohlwanddose 70 angeordnet. Durch Betätigen der Halteschraube 85 kann das Halteglied 86 aus dieser Unterbringungskammer 88 hinausgeschwenkt werden, bis es in den Bereich einer Führungsnut 87 gelangt, die an der Umfangsfläche 71 der Hohlwanddose 70 vorgesehen ist. Die Halteglieder 86 können dann durch weiteres Betätigen der Stellschraube 85 so weit verschwenkt werden, bis sie an der Innenwand des scheibenförmigen Grundkörpers 34 des Frontteiles 33 zur Anlage kommen. Auf diese Weise wird eine Verbindung zwischen der Hohlwanddose 70 einerseits und dem Frontteil 33 des Hohlkörpers 20 andererseits erzielt.

Nachzutragen bleibt noch, daß in den Innenraum der Hohlwanddose 20 hineinragend zwei Abstützflächen 89 vorgesehen sind, die der Abstützung der schon erwähnten Trennwand 78 dienen. Um dabei ein Herausnehmen der Trennwand bei Bedarf zu ermöglichen, ist diese in der Mitte ihres plattenförmigen Grundkörpers 79 liegend mit einer angeformten Handhabe 80 versehen.

An der Innenwand 90 der Hohlwanddose 70 sind ferner im paarweiser Anordnung zwei Dome 91 und 92 vorgesehen. Die Dome 91 dienen dabei dem Zusammenwirken mit den schon erwähnten Stellschrauben 85. Die Dome 91 haben dabei jeweils eine Bohrung, in die der Schaft der Stellschraube 85 hineingreift. Die beiden anderen II. Dome 92 dienen dagegen zum Zusammenwirken mit weiteren Halteschrauben 95. Diese Halteschrauben durchgreifen beim bestimmungsgemäßen Gebrauch jeweils einen Durchbruch 94 eines kreisförmigen Außendeckels 93 und gelangen dann mit ihren Schäften in nicht näher bezeichnete Bohrungen der II. Dome 92 an der Innenwand 90 der Hohlwanddose 70.

Wie aus der Fig. 11 der Zeichnungen ersichtlich ist, hat die Trennwand 78 im Bereich der Schmalseiten liegend jeweils eine Ausnehmung 99; diese ist den Abmessungen des II. Domes 92 angepaßt. Auf diese Weise wird das Anbringen der Trennwand 78 im Inneren der Hohlwanddose 70 nicht beeinträchtigt.

Durch die Unterteilung des großvolumigen Raumes der Hohlwanddose 70 ergibt sich die Möglichkeit, in den durch die Anbringung der Trennwand 78 entstandenen beiden Aufnahmekammern unterschiedliche elektrische Einrichtungen unterzubringen. Auf die Darstellung und die Unterbringungsart dieser elektrischen Einrichtungen ist in den Zeichnungen verzichtet. Es sei jedoch erwähnt, daß in der einen Kammer beispielsweise Einrichtungen für Kleinspannung und in der anderen Kammer elektrische Einrichtungen für Niederspannung untergebracht werden können. Selbstverständlich wäre es auch möglich, beispielsweise in dem oberen Aufnahmeraum 77 eine Steckdose od.dgl. unterzubringen.

Bei den Ausführungsbeispielen der Erfindung ist davon ausgegangen, daß die Frontteile 33 im wesentlichen die gleiche Grundausbildung haben, d.h., an den scheibenförmigen Grundkörper 34 ist an der Außenfläche liegend ein mittlerer Vorsprung 37 vorgesehen, der kreisförmig gestaltet ist. In allen dargestellten Ausführungsbeispielen hat dieser Kreis einen konstanten Durchmesser. Dieser ist beispielsweise so ausgerichtet, daß im Zusammenwirken mit dem Reflektor 57 eine Lampe bestimmter Leistung und Leuchtstärke untergebracht werden kann. Abweichend von den dargestellten Ausführungsbeispielen kann man jedoch ein und demselben Rückteil 21 unterschiedliche Frontteile 33 zuordnen, insbesondere solche, bei denen der Durchmesser des kreisförmigen mittleren Vorsprunges größer oder kleiner als dargestellt gehalten ist. Auf diese Weise erhält man die Möglichkeit, aus mehreren vorhandenen, unterschiedlich gestalteten Frontteilen denjenigen auszuwählen, der für den jeweiligen Verwendungszweck am geeignetsten ist.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. Dies gilt insbesondere für die Ausbildung und Gestalt der Haltevorsprünge sowohl an dem Rückteil 21 als auch an dem Anschlußgehäuse 44. Dabei kann abweichend von dem dargestellten Ausführungsbeispiel sowohl dem Rückteil 21 als auch dem Anschlußgehäuse 44 eine vom Ausführungsbeispiel dargestellte andere Anzahl von Haltevorsprüngen zugeordnet werden. Diese selbst können untereinander auch unterschiedlich gestaltet sein. Auch die Klappe 25 kann eine andere als die dargestellte Ausbildung erhalten. Insbesondere können ihre Abmessungen verändert werden. Dabei läßt sich auch die Anzahl der vorhandenen Filmscharniere zwischen Klappe und Umfangsfläche des Rückteiles variieren. Ferner ist es möglich, in den Innenraum des Rückteiles 21 auch andere als die dargestellten Einrichtungen unterzubringen, das gleiche gilt für die Unterbringung von Teilen in dem Aufnahmeraum des Anschlußgehäuses 44. Auch ist es möglich, die Gestalt des Rückteiles abweichend vom dargestellten Ausführungsbeispiel zu wählen; dies gilt auch für das Anschlußgehäuse 44. Es muß jedoch darauf geachtet werden, daß diese beiden Teile so gestaltet sind, daß bei Bedarf ein Zusammenkuppeln möglich ist. Sollten sich die Durchmesserabmessungen des Rückteiles 21 gegenüber dem dargestellten Ausführungsbeispiel ändern, so ist es selbstverständlich, daß die zugehörigen Frontteile 33 entsprechend angepaßt werden müssen.

## Patentansprüche

1. Hohlkörper (20) für die Betonbauinstallation, mit einem an diesen angefügten Anschlußgehäuse (44) zur Bildung eines Unterbringungsraumes für elektrische Einrichtungen (57, 60, 61, 69), wie Leuchten, Dosen, Klemmen od. dgl., und mit Haltemitteln zu seinem Festlegen an einer Schalung od. dgl., wobei der Hohlkörper (20) außer seiner vorderen Öffnung (30) einen einseitig geschlossenen Rückteil (21) aufweist,
**gekennzeichnet** durch die Kombination folgender Merkmale:
a) die vordere Öffnung (30) des hohlzylindrischen Rückteiles (21) ist durch direkte Verbindung mit einem Frontteil (33) verschließbar,
b) ein und derselbe Rückteil (21) ist mit einem von mehreren vorhandenen, unterschiedlich gestalteten und/oder bestückten Frontteilen (33) verbindbar,
c) jeder dieser Frontteile (33) ist an einer Betonbauschalung befestigbar,
d) der Rückteil (21) des Hohlkörpers (20) hat einen Stutzen (24) zum lösbaren Anbringen des Anschlußgehäuses (44),
e) der Stutzen (24) hat eine Zwischenwand (25) zum Anschlußgehäuse (44),
f) der Stutzen (24) hat Rastausnehmungen (28), die mit Rastvorsprüngen (48) des Anschlußgehäuses (44) zusammenwirken,
g) der Stutzen (24) hat an seinem dem Rückteil (21) zugekehrten Ende die Zwischenwand (25),
h) die Zwischenwand (25) ist als Klappe ausgebildet, die sowohl in eine Öffnungs- als auch in eine Schließlage überführbar ist,
i) die Klappe (25) ist über wenigstens ein Filmscharnier (110) mit der benachbarten Wand des Rückteiles (21) des Hohlkörpers (20) verbunden.

2. Hohlkörper nach Anspruch 1, dadurch gekennzeichnet, daß die Klappe (25) in Draufsicht gesehen etwa rechteckig gestaltet ist, und die Länge dieses Rechtecks etwa der Höhe des Rückteiles (21) des Hohlkörpers (20) entspricht, und daß das Filmscharnier (110) im Bereich der einen Längsseite des Rechtecks angeordnet ist.

3. Hohlkörper nach den Ansprüchen 1 und 2, dadurch gekennzeichnet, daß die Klappe (25) zusätzlich über wenigstens einen Abreiß-Steg (112) mit der benachbarten Wand des Rückteiles (21) des Hohlkörpers (20) verbunden ist.

4. Hohlkörper nach einem oder mehreren der vorangehenden Ansprüche 1 bis 3, dadurch gekennzeichnet, daß die Klappe (25) wenigstens einen Leitungsdurchlaß (111) aufweist.

5. Hohlkörper nach Anspruch 4, dadurch gekennzeichnet, daß der Leitungsdurchlaß (111) an der der Öffnung (30) des Rückteiles (21) des Hohlkörpers (20) zugekehrten Schmalseite der rechteckigen Klappe (25) angeordnet ist.

6. Hohlkörper nach Anspruch 4 und 5, dadurch gekennzeichnet, daß der Leitungsdurchlaß (111) einseitig offen und in Draufsicht gesehen U-förmig gestaltet ist.

7. Hohlkörper nach Anspruch 1, dadurch gekennzeichnet, daß der Rückteil (21) des Hohlkörpers (20) auf seiner äußeren Umfangsfläche Haltevorsprünge (105) aufweist.

8. Hohlkörper nach Anspruch 7, dadurch gekennzeichnet, daß die Haltevorsprünge (105) auf der Umfangsfläche des hohlzylindrischen Rückteiles (21) diametral gegenüberliegend angeordnet sind und jeweils ein Loch (106) zum Anbringen eines Halteelements für den Rückteil (21) aufweisen.

9. Hohlkörper nach den Ansprüchen 7 und 8, dadurch gekennzeichnet, daß die Haltevorsprünge (105) mittig und jeweils im Bereich einer Abflachung (23) des Rückteiles (21) angeordnet sind.

10. Hohlkörper nach den Ansprüchen 7 bis 9, dadurch gekennzeichnet, daß jeder Haltevorsprung (105) in Draufsicht gesehen dreieckförmig gestaltet ist, wobei die längere Seite dieses Dreiecks in die Umfangsfläche des Rückteiles (21) des Hohlkörpers (20) einmündet.

11. Hohlkörper nach Anspruch 10, dadurch gekennzeichnet, daß die Enden der längeren Seite des dreieckförmigen Haltevorsprunges (105) jeweils in einen vorstehenden Außenrand (107) der Umfangsfläche des Rückteiles (21) des Kohlkörpers (20) übergehen.

12. Hohlkörper nach Anspruch 1, dadurch gekennzeichnet, daß an der Rückwand (108) des Anschlußgehäuses (44) des Hohlkörpers (20) ein Haltevorsprung (109) mit einem Loch (113) angeordnet ist.

13. Hohlkörper nach Anspruch 12, dadurch gekennzeichnet, daß der Haltevorsprung (109) in der Mitte der Rückwand (108) des Anschlußgehäuses (44) liegt und Versteifungsränder (114) aufweist.

14. Hohlkörper nach Anspruch 1, dadurch gekennzeichnet, daß die Rastausnehmung (28) in der Seitenwand (27) des Stutzens (24) durch eine klappbare Wand (115) verschlossen ist.

15. Hohlkörper nach Anspruch 14, dadurch gekennzeichnet, daß die Wand (115) über ein Filmscharnier mit der Seitenwand (27) des Stutzens (24) verbunden ist.

16. Hohlkörper nach Anspruch 1, dadurch gekennzeichnet, daß in der Seitenwand (27) des Stutzens (24) ein Durchlaß (29) mit einer dünnen Trennwand angeordnet ist, die nach ihrem Durchstoßen mittels eines Rohres (117) eine Zugentlastung sowie eine Dichtlippe (116) bildet, die mit der Umfangsfläche des Rohres (117) zusammenwirkt.

17. Hohlkörper nach Anspruch 1, dadurch gekennzeichnet, daß der Rückteil (21) und der Frontteil (33) zusammenwirkende Rastausnehmungen (32) und Rasten (36) aufweisen, und daß der Frontteil (33) einen mittleren Vorsprung (37) aufweist, dessen Öffnung (56) durch einen kreisförmigen Wandungsteil (38) zunächst verschlossen ist, der Haltevorsprünge (40) für Befestigungselemente zum Festlegen des Frontteiles (33) an einer Betonbauschalung aufweist, und der entfernbar ist.

18. Hohlkörper nach Anspruch 1, dadurch gekennzeichnet, daß das Anschlußgehäuse (44) ein kastenförmiger, an seinem einen Ende eine Einführungsöffnung (54) aufweisender Hohlkörper ist, der einen rückwärtigen Aufnahmeteil (45) und einen vorderen Anschlußteil (46) aufweist.

19. Hohlkörper nach Anspruch 8, dadurch gekennzeichnet, daß der Aufnahmeteil (45) und der Anschlußteil (46) des Anschlußgehäuses (44) durch einen einen Anschlag bildenden äußeren Vorsprung (96) voneinander getrennt sind, und daß an den Seitenwänden (47) des Anschlußteiles (46) die Rastvorsprünge (48) angeformt sind.

20. Hohlkörper nach Anspruch 19, dadurch gekennzeichnet, daß unterhalb eines Rastvorsprunges (48) jeweils eine Ausnehmung (49) angeordnet ist, die in der Kuppellage mit dem Stutzen (24) des Rückteiles (21) mit ausbrechbaren Wandungsteilen (29) der Seitenwände (27) dieses Stutzens (24) fluchten.

21. Hohlkörper nach einem oder mehreren der Ansprüche 18 bis 20, dadurch gekennzeichnet, daß an der Außenseite des Bodens (50) des Anschlußgehäuses (44) Abstützungen (51 bzw. 52) angeformt sind.

22. Hohlkörper nach Anspruch 21, dadurch gekennzeichnet, daß die Abstützung (51) an der Übergangsstelle zwischen dem Aufnahmeteil (45) und dem Anschlußteil (46) des Anschlußgehäuses (44) und die Abstützung (52) im Bereich des rückwärtigen Endes des Anschlußgehäuses (44) angeordnet sind.

23. Hohlkörper nach den Ansprüchen 21 und 22, dadurch gekennzeichnet, daß die Abstützungen (51 bzw. 52) unterschiedliche Höhe aufweisen, derart, daß die Stirnflächen der Abstützung (52) an der Betonbauschalung anliegen, während die Stirnflächen der Abstützung (51) entfernt davon liegen.

24. Hohlkörper nach einem oder mehreren der vorangehenden Ansprüche, dadurch gekennzeichnet, daß in die Öffnung (56) des Frontteiles (33) ein Reflektor (57) für eine Lampe, wie Halogenlampe, eingesetzt ist, der im Zusammenwirken mit einer Abdeckung (55) durch eine entfernbare Haltefeder (97) lagegesichert ist, und daß die Abdeckung (55) Haltewinkel (64) aufweist, die ihrerseits je eine Haltefeder (65) tragen, deren Abstützbereich (66) an der Innenseite des scheibenförmigen Grundkörpers (34) des Frontteiles (33) anliegt. (Fig. 8)

25. Hohlkörper nach Anspruch 24, dadurch gekennzeichnet, daß die Abdeckung (55) mit einem Außenflansch (100) die vordere Stirnfläche des mittleren Vorsprunges (37) des Frontteiles (33) übergreift und eine mittlere kreisförmige Öffnung (101) zum Durchgriff des Reflektors (57) aufweist, wobei der untere Bereich der Begrenzungswand der Öffnung (101) zur Bildung einer Auflagefläche (102) für Teile des Randes des Reflektors (57) nach innen abgewinkelt ist. (Fig. 8)

26. Hohlkörper nach Anspruch 24 und 25, dadurch gekennzeichnet, daß auf zwei diametral gegenüberliegenden Seiten der Öffnung (101) der Abdeckung (55) an der Innenseite liegend je ein Haltewinkel (64) befestigt ist, der einerseits einen freiliegenden Schenkel (104) zur Lagerung der Haltefeder (65) aufweist, deren eines Ende sich an einem Anschlag (103) des Haltewinkels (64) und deren anderes Ende (66) sich an der Innenseite des scheibenförmigen Grundkörpers (34) des Frontteiles (33) abstützt. (Fig. 8)

27. Hohlkörper nach den Ansprüchen 24 bis 26, dadurch gekennzeichnet, daß an der Außenseite eines hochgezogenen Begrenzungsrandes der Öffnung (101) der Abdeckung (55) ein Träger (62) befestigt ist, dessen oberes Ende als Abwinklung (63) gestaltet ist, die auf ihrer Außenseite Klemmen (61) trägt. (Fig. 8)

28. Hohlkörper nach Anspruch 27, dadurch gekennzeichnet, daß an die Klemmen (61) einerseits eine Verbindungsleitung (98) und andererseits eine weitere Verbindungsleitung (68) angeschlossen ist, von denen die eine (98) mit ihren Leitern (60) an einen Steckverbinder (59) und die andere (68) an einen Transformator (69) angeschlossen ist. (Fig. 8)

29. Hohlkörper nach Anspruch 28, dadurch gekennzeichnet, daß der Steckverbinder (59) mit dem abgesetzten rückwärtigen Ende (58) des Reflektors (57) verbunden ist. (Fig. 8)

30. Hohlkörper nach einem oder mehreren der vorangehenden Ansprüche, dadurch gekennzeichnet, daß mit dem Frontteil (33) des Hohlkörpers (20) lösbar eine Hohlwanddose (70) verbindbar ist, die nach ihrem Durchstecken durch die Öffnung (101) des Frontteiles (33) sich mit ihrem Abstützflansch (75) in eine Versenkung des Begrenzungsrandes der Öffnung (101) legt, und deren Halteglieder (86) durch Betätigen von Stellschrauben (85) an die Innenwand des Frontteiles (33) zwecks Fixierung der Hohlwanddose (70) andrückbar sind. (Fig. 9, 10 u. 11)

31. Hohlkörper nach Anspruch 1 und 24, dadurch gekennzeichnet, daß die Öffnung (56) des Frontteiles (33) derart bemessen ist, daß der Transformator (69) durch sie hindurchführbar und in den rückwärtigen Aufnahmeraum (45) des Anschlußgehäuses (44) einbringbar ist.

32. Hohlkörper nach Anspruch 1, gekennzeichnet durch die Verwendung von Frontteilen (33) mit unterschiedliche Durchmesser aufweisendem mittleren Vorsprung (37).

33. Hohlkörper nach Anspruch 1, dadurch gekennzeichnet, daß der Rückteil (21) mehrere Stutzen (24) zum Anbringen einer entsprechenden Anzahl von Anschlußgehäusen (44) aufweist.

## Claims

1. A hollow body (20) for concrete construction installation, comprising a connecting housing (44) which is added thereto for forming an accommodation space for electrical devices (57, 60, 61, 69) such as lamps, sockets, terminals or the like, and holding means for fixing it to a shuttering arrangement or the like, wherein besides its front opening (30) the hollow body (20) has a rear portion (21) which is closed at one side, characterised by the combination of the following features:
a) the front opening (30) of the hollow-cylindrical rear portion (21) is closable by direct connection to a front portion (33),
b) one and the same rear portion (21) can be connected to one of a plurality of existing front portions (33) which are of different configurations and/or which are differently equipped,
c) each of those front portions (33) can be fixed to a concrete construction shuttering arrangement,
d) the rear portion (21) of the hollow body (20) has a connection (24) for releasably mounting the connection housing (44),
e) the connection (24) has an intermediate wall (25) relative to the connecting housing (44),
f) the connection (24) has retaining openings (28) co-operating with retaining projections (48) of the connecting housing (44),
g) the connection (24) has the intermediate wall (25) at its end towards the rear portion (21),
h) the intermediate wall (25) is in the form of a flap which can be moved both into an open position and also into a closed position, and
i) the flap (25) is connected by way of at least one film hinge (110) to the adjacent wall of the rear portion (21) of the hollow body (20).

2. A hollow body according to claim 1 characterised in that the flap (25) is approximately of rectangular configuration when viewed in plan and the length of said rectangle approximately corresponds to the height of the rear portion (21) of the hollow body (20) and that the film hinge (110) is arranged in the region of the one longitudinal side of the rectangle.

3. A hollow body according to claims 1 and 2 characterised in that the flap (25) is additionally connected to the adjacent wall of the rear portion (21) of the hollow body (20) by way of at least one tear-away web (112).

4. A hollow body according to one or more of preceding claims 1 to 3 characterised in that the flap (25) has at least one conduit passage (111).

5. A hollow body according to claim 4 characterised in that the conduit passage (111) is arranged at the narrow side of the rectangular flap (25), which narrow side is towards the opening (30) of the rear portion (21) of the hollow body (20).

6. A hollow body according to claims 4 and 5 characterised in that the conduit passage (111) is open at one side and is of a U-shaped configuration in plan.

7. A hollow body according to claim 1 characterised in that the rear portion (21) of the hollow body (20) has holding projections (105) on its outer peripheral surface.

8. A hollow body according to claim 7 characterised in that the holding projections (105) are arranged in mutually diametrally opposite relationship on the peripheral surface of the hollow-cylindrical rear portion (21) and each have a respective hole (106) for mounting a holding element for the rear portion (21).

9. A hollow body according to claims 7 and 8 characterised in that the holding projections (105) are arranged centrally and in the region of a respective flat (23) of the rear portion (21).

10. A hollow body according to claims 7 to 9 characterised in that each holding projection (105) is of a triangular configuration in plan, wherein the longer side of said triangle goes into the peripheral surface of the rear portion (21) of the hollow body (20).

11. A hollow body according to claim 10 characterised in that the ends of the longer side of the triangular holding projection (105) each merge into a projecting outer rim (107) on the peripheral surface of the rear portion (21) of the hollow body (20).

12. A hollow body according to claim 1 characterised in that a holding projection (109) with a hole (113) is arranged at the rear wall (108) of the connecting housing (44) of the hollow body (20).

13. A hollow body according to claim 12 characterised in that the holding projection (109) is in the middle of the rear wall (108) of the connecting housing (44) and has stiffening edges (114).

14. A hollow body according to claim 1 characterised in that the retaining opening (28) in the side wall (27) of the connection (24) is closed by a pivotable wall (115).

15. A hollow body according to claim 14 characterised in that the wall (115) is connected by way of a film hinge to the side wall (27) of the connection (24).

16. A hollow body according to claim 1 characterised in that arranged in the side wall (27) of the connection (24) is a passage (29) with a thin separating wall which, after it has been pierced by means of a tube (117) forms a means for carrying a tensile force and a sealing lip (116) which co-operates with the peripheral surface of the tube (117).

17. A hollow body according to claim 1 characterised in that the rear portion (21) and the front portion (33) have co-operating retaining openings (32) and detents (36) and that the front portion (33) has a central projection (37) whose opening (56) is initially closed by a circular wall portion (38) which has holding projections (40) for fixing elements for securing the front portion (33) to a concrete construction shuttering arrangement, and which is removable.

18. A hollow body according to claim 1 characterised in that the connecting housing (44) is a box-shaped hollow body which has an insertion opening (54) at its one end and which has a rearward receiving portion (45) and a front connecting portion (46).

19. A hollow body according to claim 8 characterised in that the receiving portion (45) and the connecting portion (46) of the connecting housing (44) are separated from each other by an outer projection (96) forming an abutment, and that the retaining projections (48) are formed on the side walls (47) of the connecting portion (46).

20. A hollow body according to claim 19 characterised in that arranged beneath each retaining projection (48) is a respective opening (49) which in the position of coupling to the connection (24) of the rear portion (21) align with wall portions (29), which can be broken off, of the side walls (27) of said connection (24).

21. A hollow body according to one or more of claims 18 to 20 characterised in that support means (51 and 52 respectively) are formed on the outside of the bottom (50) of the connecting housing (44).

22. A hollow body according to claim 21 characterised in that the support means (51) is arranged at the transition between the receiving portion (45) and the connecting portion (46) of the connecting housing (44) and the support means (52) is arranged in the region of the rearward end of the connecting housing (44).

23. A hollow body according to claims 21 and 22 characterised in that the support means (51 and 52 respectively) are of different heights in such a way that the end faces of the support means (52) bear against the concrete construction shuttering arrangement while the end faces of the support means (51) are spaced therefrom.

24. A hollow body according to one or more of the preceding claims characterised in that fitted into the opening (56) of the front portion (33) is a reflector (57) for a lamp such as a halogen lamp, which is secured in position in co-operation with a cover (55) by a removable holding spring (97), and that the cover (55) has holding angle portions (64) which in turn each carry a respective holding spring (65) whose support region (66) bears against the inside of the disc-shaped main body (34) of the front portion (33). (Figure 8)

25. A hollow body according to claim 24 characterised in that the cover (55) engages with an outer flange (100) over the front end face of the central projection (37) of the front portion (33) and has a central circular opening (101) for the reflector (57) to pass therethrough, wherein the lower region of the boundary wall of the opening (101) is angled inwardly to form a support surface (102) for parts of the edge of the reflector (57). (Figure 8)

26. A hollow body according to claims 24 and 25 characterised in that a respective holding angle portion (64) is fixed on two diametrally oppositely disposed sides of the opening (101) of the cover (55), bearing against the inside thereof, the respective holding angle portion (64) at one side having an exposed limb (104) for mounting the holding spring (65) whose one end is supported against an abutment (103) of the holding angle portion (64) and whose other end (66) is supported against the inside of the disc-shaped main body (34) of the front portion (33). (Figure 8)

27. A hollow body according to claims 24 to 26 characterised in that fixed to the outside of an upwardly extended boundary edge of the opening (101) of the cover (55) is a carrier (62) whose upper end is in the form of an angle portion (63) which carries terminals (61) on its outside. (Figure 8)

28. A hollow body according to claim 27 characterised in that connected to the terminals (61) are on the one hand a connecting line (98) and on the other hand a further connecting line (68) of which the one (98) is connected with its conductors (60) to a plug connection (59) and the other (68) is connected to a transformer (69). (Figure 8)

29. A hollow body according to claim 28 characterised in that the plug connector (59) is connected to the reduced rearward end (58) of the reflector (57). (Figure 8)

30. A hollow body according to one or more of the preceding claims characterised in that a hollow wall socket (70) can be releasably connected to the front portion (33) of the hollow body (20), which socket (70) after being passed through the opening (101) of the front portion (33) lies with its support flange (75) in a depression in the boundary edge of the opening (101), and whose holding members (86) can be pressed against the inside wall of the front portion (33) by actuation of setting screws (85) for the purposes of fixing the hollow wall socket (70). (Figures 9, 10 and 11)

31. A hollow body according to claims 1 and 24 characterised in that the opening (56) of the front portion (33) is of such a size that the transformer (69) can be passed through same and can be introduced into the rearward receiving space (45) of the connecting housing (44).

32. A hollow body according to claim 1 characterised by the use of front portions (33) with a central projection (37) of different diameters.

33. A hollow body according to claim 1 characterised in that the rear portion (21) has a plurality of connections (24) for mounting a corresponding number of connecting housings (44).

## Revendications

1. Corps creux (20) pour installation dans une structure en béton, avec un boîtier de raccordement (44) qui lui est annexé, en vue de constituer un espace de logement pour des équipements électriques (57, 60, 61, 69), tels que des luminaires, prises de courant, bornes ou analogues, et avec des moyens de maintien pour assurer sa fixation sur un coffrage ou analogue, le corps creux (20) présentant, outre son ouverture avant (30), une partie arrière (21) fermée sur une face,
caractérisé par la combinaison des caractéristiques ci-après :
a) l'ouverture avant (30) de la partie arrière (21) cylindrique creuse est susceptible d'être obturée par liaison directe à une partie avant (33),
b) une seule et même partie arrière (21) est susceptible d'être reliée à des parties avant(33) parmi plusieurs existantes, ayant des configuration et/ou des équipements différents,
c) chacune de ces parties avant (c) est susceptible d'être fixée sur un coffrage pour béton,
d) la partie arrière (21) du corps creux (20) présent un raccord (24) pour le montage amovible du boîtier de raccordement (44),
e) le raccord (24) comporte une paroi intermédiaire (25) destinée au boîtier de raccordement (44),
f) le raccord (24) comporte des évidements d'encliquetage (28) qui coopèrent avec des saillies d'encliquetage (48) du boîtier de raccordement (44),
g) le raccord compte la paroi intermédiaire (25) à son extrémité tournée vers la partie arrière (21),
h) la paroi intermédiaire (25) est réalisée sous forme de volet, qui est susceptible d'être placée soit en position d'ouverture soit en position de fermeture,
i) le volet (25) est relié, par au moins une charnière-film (110), à la paroi voisine de la partie arrière du corps creux (20).

2. Corps creux selon la revendication 1, caractérisé en ce que le volet (25) a, en vue de dessus, une forme à peu près rectangulaire et la longueur de ce rectangle correspond à peu près à la hauteur de la partie arrière (21) du corps creux (20), et en ce que la charnière-film (110) est disposée dans la zone d'un côté long du rectangle.

3. Corps creux (20) selon les revendications 1 et 2, caractérisé en ce que le volet (25) est relié en plus à la paroi voisine de la partie arrière (21) du corps creux (20), par l'intermédiaire d'au moins une nervure destinée au déchirement (112).

4. Corps creux selon l'une ou plusieurs des revendications 1 à 3 précédentes, caractérisé en ce que le volet (25) présente au moins un passage pour des conducteurs électriques(111).

5. Corps creux selon la revendication 4, caractérisé en ce que le passage pour des conducteurs électriques(111) est disposé sur le petit côté de volet rectangulaire (25) qui est tourné vers l'ouverture (30) de la partie arrière (21) du corps creux (20).

6. Corps creux selon les revendications 4 et 5, caractérisé en ce que le passage pour des conducteurs électriques (111) est ouvert sur un côté et a, en vue de dessus, une forme de U.

7. Corps creux selon la revendication 1, caractérisé en ce que la partie arrière (21) du corps creux (20) présente des saillies de maintien (105) sur sa surface périphérique extérieure.

8. Corps creux selon la revendication 7, caractérisé en ce que les saillies de maintien (105) sont disposées de façon diamétralement opposée sur la surface périphérique de la partie arrière (21) cylindrique creuse, et présentent chacune un trou (106) destiné au montage d'un élément de maintien pour la partie arrière (21).

9. Corps creux selon les revendications 7 et 8, caractérisé en ce que les saillies de maintien (105) sont disposées au centre et chaque fois dans la zone d'un aplatissement (23) de la partie arrière (21).

10. Corps creux selon les revendications 7 et 9, caractérisé en ce que chaque saillie de maintien (105) a, en vue de dessus, une forme triangulaire, le côté de ce triangle débouchant dans la surface périphérique de la partie arrière (21) du corps creux (20).

11. Corps creux selon la revendication 10, caractérisé en ce que les extrémités du côté long des saillies de maintien (105) à forme triangulaire se transforment chacune en la bordure extérieure (107) en saillie de la surface périphérique de la partie arrière (21) du corps creux (20).

12. Corps creux selon la revendication 1, caractérisé en ce que sur la paroi arrière (108) du boîtier de raccordement (44) du corps creux (20) est disposée une saillie de maintien (109) avec un trou (113).

13. Corps creux selon la revendication 12, caractérisé en ce que la saillie de maintien (109) est située au centre de la paroi arrière (108) du boîtier de raccordement (44) et présente des bordures de rigidification (114).

14. Corps creux selon la revendication 1, caractérisé en ce que l'évidement d'encliquetage (28), ménagé dans la paroi latérale (27) du raccord (24), est obturé par une paroi (115) rabattable.

15. Corps creux selon la revendication 14, caractérisé en ce que la paroi (115) est reliée à la paroi latérale (27) du raccord (24) par l'intermédiaire d'une charnière-film.

16. Corps creux selon la revendication 1, caractérisé en ce qu'un passage (29) ayant une paroi de séparation mince est ménagé dans la paroi latérale (27) du raccord (24), paroi de séparation qui constitue, après son transpercement au moyen d'un tube (117), une décharge de traction ainsi qu'une lèvre d'étanchéité (116) coopérant avec la surface périphérique du tube (117).

17. Corps creux selon la revendication 1, caractérisé en ce que la partie arrière (21) et la partie avant (33) présentent des évidements d'encliquetage (32) et des cliquets (36) qui coopèrent, et en ce que la partie avant (33) présente une saillie (37) centrale, dont l'ouverture (56) est d'abord obturée par une partie de paroi (38) à forme circulaire, qui présente des saillies de maintien (40) destinées à des éléments de fixation prévus pour fixer la partie avant (33) sur un coffrage béton, et qui est susceptible d'être enlevée.

18. Corps creux selon la revendication 1, caractérisé en ce que le boîtier raccordé (44) est un corps creux en forme de caisson, présentant à une de ses extrémités une ouverture d'introduction (54), corps creux présentant une partie de logement (45) arrière et une partie de raccordement (46) avant.

19. Corps creux selon la revendication 8, caractérisé en ce que la partie de logement (45) et la partie de raccordement (46) du boîtier de raccordement (44) sont séparées l'une de l'autre par une saillie extérieure (96) constituant une butée et en ce que les saillies d'encliquetage (48) sont formées d'un seul tenant sur les parois latérales (47) de la partie de raccordement (46).

20. Corps creux selon la revendication 19, caractérisé en ce qu'au-dessous de chacune des saillies d'encliquetage (48) est ménagé un évidement (49), aligné, dans la position d'accouplement avec le raccord (24) de la partie arrière (21), vis-à-vis de parties de paroi (29) brisables des parois latérales (27) de ce raccord (24).

21. Corps creux selon l'une ou plusieurs revendications 18 à 20, caractérisé en ce que des appuis (51, respectivement 52) sont formés d'un seul tenant sur la face extérieure du fond (50) du boîtier de raccordement (44).

22. Corps creux selon la revendication 21, caractérisé en ce que l'appui (51) est disposé au point de transition entre la partie de logement (45) et la partie de raccordement (46) du boîtier de raccordement (44) et l'appui (52) est disposé dans la zone de l'extrémité arrière du boîtier de raccordement (44).

23. Corps creux selon les revendications 21 et 22, caractérisé en ce que les appuis (51, respectivement 52) ont des hauteurs différentes, de manière que les faces frontales de l'appui (52) appuient sur le coffrage béton, tandis que les faces frontales de l'appui (51) en sont éloignées.

24. Corps creux selon l'une ou plusieurs des revendications précédentes, caractérisé en ce que, dans l'ouverture (56) de la partie avant (33), est inséré un réflecteur (57) destiné à une lampe, telle qu'une lampe halogène, qui est fixée en position en coopération avec un recouvrement (55) au moyen d'un ressort de maintien (97) susceptible d'être enlevé, et en ce que le recouvrement (55) présente des cornières de maintien (64) qui portent de leur côté, chacune, un ressort de maintien (65) dont la zone d'appui (66) appuyant sur la face intérieure du corps de base (34) discoïde de la partie avant (33). (Figure 8)

25. Corps creux selon la revendication 24, caractérisé en ce que le recouvrement (55) entoure, par une bride extérieure (100), la face frontale avant de la saillie centrale (37) de la partie avant (33) et présente une ouverture (101) circulaire centrale destinée au passage du réflecteur(57), la zone inférieure de la paroi de limitation de l'ouverture (101) étant coudée vers l'intérieur pour constituer une surface d'appui (102) destinée à des parties du bord du réflecteur (57). (Figure 8).

26. Corps creux selon les revendications 24 et 25, caractérisé en ce que, sur chacun des deux côtés diamétralement opposés de l'ouverture (101) du recouvrement (55), est fixée, en face intérieure, une cornière de maintien (64) qui présente, d'une part, une branche (104) libre pour le montage tournant du ressort de maintien (65), dont une extrémité s'appuie sur une butée (103) de la cornière de maintien (64) et dont l'autre extrémité (66) prend appui sur la face intérieure du corps de base discoïde de la partie avant (33). (Figure 8)

27. Corps creux selon les revendications 24 à 26, caractérisé en ce que, sur la face extérieure d'un bord de limitation relevé vers le haut de l'ouverture (101), du recouvrement (55), est fixé un support (62) dont l'extrémité supérieure est configurée en coudage (63), portant des bornes (61) sur sa face extérieure. (Figure 8)

28. Corps creux selon la revendication 27, caractérisé en ce qu'aux bornes (61) est raccordée, d'une part, une ligne de liaison (98) et, d'autre part, une autre ligne de liaison (68), lignes dont l'une (98) est raccordée par ses conducteurs (60) à un connecteur à broches mâles-femelles (59) et l'autre (68) à un transformateur (69). (Figure 8)

29. Corps creux selon la revendication 28, caractérisé en ce que le connecteur à broches mâles-femelles (59) est relié à l'extrémité arrière(58) en retrait du réflecteur (57). (Figure 8)

30. Corps creux selon l'une ou plusieurs des revendications précédentes, caractérisé en ce qu'une prise électrique pour paroi creuse (70) est susceptible d'être reliée de façon amovible à la partie avant (33) du corps creux (20) et, après avoir été enfichée dans l'ouverture (101) de la partie avant (33), est placée par sa bride d'appui (75) dans un creusement du bord de limitation de l'ouverture (101), et dont les organes de maintien (86) sont susceptibles d'être pressés, par actionnement de vis de réglage (85), sur la paroi intérieure de la partie avant (33), dans le but d'assurer une fixation de la prise électrique pour paroi creuse (70). (Figures 9, 10 et 11)

31. Corps creux selon les revendications 1 et 24, caractérisé en ce que l'ouverture (56) de la paroi avant (33) est dimensionnée de manière que le transformateur (69) puisse être passé à travers elle et puisse être logé dans l'espace de logement (45) arrière du boîtier de raccordement (44).

32. Corps creux selon la revendication 1, caractérisé par l'utilisation de parties avant (33) ayant une saillie (37) centrale présentant un diamètre différent.

33. Corps creux selon la revendication 1, caractérisé en ce que la partie arrière (21) présente plusieurs raccords (24) destinées au montage d'un nombre correspondant de boîtiers de raccordement (44).
